# EUROPEAN PATENT SPECIFICATION

(11) **EP 3 674 278 B1**
(45) Date of publication and mention of the grant of the patent: **24.04.2024**
(21) Application number: 18904656.8
(22) Date of filing: 10.10.2018
(51) Int. Cl.: C05G 5/30, C05C 9/02

(54) **PREPARATION OF A SUSTAINED-RELEASE AND CONTROLLED-RELEASE FERTILIZER HAVING CORE-SHELL STRUCTURE**
HERSTELLUNGSVERFAHREN EINES DÜNGEMITTELS MIT VERZÖGERTER FREISETZUNG UND KONTROLLIERTER FREISETZUNG MIT KERN-SCHALE-STRUKTUR
PRÉPARATION D'UN ENGRAIS À LIBÉRATION PROLONGÉE ET À LIBÉRATION CONTRÔLÉE AYANT UNE STRUCTURE NOYAU-ENVELOPPE

(30) Priority: 09.02.2018 CN 201810132053
(43) Date of publication of application: 01.07.2020
(73) Proprietor: Zhengzhou Gaofu Fertilizer Co., Ltd, Henan 450000 (CN)
(72) Inventor: HU, Jianmin, Zhengzhou, Henan 450000 (CN); LIU, Xiaoyong, Kaifeng County Henan 450000 (CN); HU, Jinzhe, Zhengzhou, Henan 450000 (CN); WAN, Peikun, Henan 450000 (CN); BAI, Yuntao, Henan 450000 (CN); HU, Shumin, Henan 450000 (CN)
(74) Representative: Brevalex
(86) International application number: PCT/CN2018/109651
(87) International publication number: WO 2019/153775

(56) References cited:
- CN-A- 104 926 444
- CN-A- 105 330 494
- CN-A- 107 382 489
- CN-A- 107 586 223
- CN-A- 108 456 121
- KR-A- 20010 086 703
- US-A1- 2004 023 809
- US-A1- 2016 075 609
- US-B1- 6 432 156

## Description

### Technical field

The present disclosure relates to the field of slow/controlled-release fertilizer production, in particular to a method for preparing a slow/controlled-release fertilizer with a core-shell structure.

### Background art

Chemical fertilizers are an important production material in agricultural development; as humans' demand for cereals steadily increases, the amounts of chemical fertilizers used are also increasing day by day. At present, the utilization rate of chemical fertilizers in China is low, while problems such as resource wastage and environmental pollution are serious. Research and a large number of test base demonstrations have proved that coated slow/controlled-release fertilizers can greatly increase the utilization rate of fertilizer nutrients, helping to save fertilizer resources and protect the ecosystem, to ensure the growth and development of agricultural crops.

Coating materials currently being developed on the market include organic and inorganic materials which do not dissolve, dissolve slightly or dissolve with difficulty in water, and although these have improved the slow/controlled-release performance of fertilizers to varying degrees, they still have shortcomings which require improvement.

US 2004/023809 A1 discloses coated aggregates containing urea-formaldehyde polymer that is made by acidifying an aqueous methyol urea solution, wherein the solution is made by reacting urea and formaldehyde at a urea formaldehyde mole ratio of 0.95:1 to 1.05:1. Following the initial formation of methyol ureas, the nascent urea-formaldehyde polymer (UFP) is condensed until it becomes insoluble in the aqueous environment. Then it is spray-dried, dispersed and used to coat the core.

US 2016/075609 A1 discloses a core of N-(n-butyl)thiophosphoric triamide (NBPT) coated with an UFP. The UFP is prepared by reacting, in an aqueous environment, urea and formaldehyde at a urea:formaldehyde mole ratio of 1:1 in pH and temperature conditions selected to produce methyol ureas. The UFP is spray-dried before diluting it in a solution which is then used to coat the NBPT.

### Content of the invention

An object of the present disclosure is to provide a method for preparing a slow/controlled-release fertilizer with a core-shell structure, with a process that is simple and easy to operate. This method is as defined in the claims.

The present disclosure employs the following technical solution to solve the technical problem thereof.

In one aspect, a method for preparing a slow/controlled-release fertilizer with a core-shell structure is provided, said fertilizer comprising a fertilizer granule core and a polyurea formaldehyde coating layer which covers a surface of the fertilizer granule core; the molar ratio of urea to formaldehyde in a starting material of the polyurea formaldehyde is 1 - 2.5 : 1, and the polyurea formaldehyde coating layer at least comprises polyurea formaldehyde containing 2 - 5 carbon atoms.

This method for preparing a slow/controlled-release fertilizer with a core-shell structure comprises : producing methylol urea from urea and formaldehyde in alkaline conditions, then adjusting to acidity and spraying onto a surface of a fertilizer granule core, then carrying out in-situ polymerization while removing water by evaporation to produce polyurea formaldehyde to cover the fertilizer granule core, to obtain the slow/controlled-release fertilizer with a core-shell structure.

A polymerized water-insoluble component contained in the coating layer decomposes slowly through the action of microbes in soil, for absorption by crops. As the coating layer decomposes, nutrients of a core granular fertilizer are slowly released, until finally the coating layer is completely decomposed, and all nutrients are completely released. Since the carbon chain length of polyurea formaldehyde in the coating varies, the rate of decomposition also varies, and the intensity of controlled release of core granular fertilizer nutrients also varies accordingly. Coating layers of different carbon chain lengths and thicknesses are prepared, thereby meeting the growth needs of different crops. The coating layer itself is a slow-release nitrogen fertilizer, which leaves no residue at all after decomposition, and has no film shell degradation problem, so is environmentally friendly.

### Description of the accompanying drawing

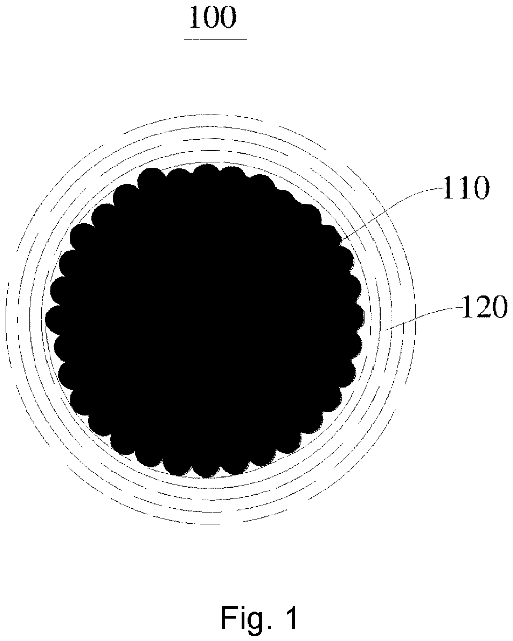

Fig. 1 is a sectional drawing of a slow/controlled-release fertilizer with a core-shell structure as prepared according to the method of the present invention.

Reference labels: 100 - slow/controlled-release fertilizer with core-shell structure; 110 - fertilizer granule core; 120 - coating layer.

### Particular embodiments

To clarify the object, technical solution and advantages of embodiments of the present disclosure, the technical solution in embodiments of the present invention is described clearly and completely below. Where specific conditions are not specified in the embodiments, conventional conditions or conditions recommended by manufacturers are used. Any reagent or instrument used which does not have a manufacturer specified is a commercially available conventional product.

A slow/controlled-release fertilizer 100 with a core-shell structure and a method for preparing same in embodiments of the present invention are explained in specific terms below.

Coating materials currently being developed on the market include organic and inorganic materials which do not dissolve, dissolve slightly or dissolve with difficulty in water, and although these have improved the slow/controlled-release performance of fertilizers to varying degrees, they still have shortcomings which require improvement. For example, coating materials which degrade with difficulty, such as water-insoluble paraffin, bitumen and plastics materials, will cause secondary pollution of soil; degradable organic polymers are high-priced, and cannot be promoted on a large scale; sulfur coatings, though able to control the release of fertilizer, quickly decompose by oxidation in soil, so release nutrients quickly, and readily cause soil acidification, destroying the soil structure; modified starch coating materials decompose very quickly in soil, so the slow/controlled-release effect is also not ideal.

On this basis, a slow/controlled-release fertilizer 100 with a core-shell structure is prepared according to the method of the invention, comprising a fertilizer granule core 110 and a polyurea formaldehyde coating layer 120 which covers a surface of the fertilizer granule core 110; the molar ratio of urea to formaldehyde in a starting material of the polyurea formaldehyde is 1 - 2.5 : 1, and the polyurea formaldehyde at least comprises polyurea formaldehyde containing 2 - 5 carbon atoms.

Generally, polyurea formaldehyde is a slow-release nitrogen fertilizer with four forms of nitrogen contained in urea formaldehyde, containing a portion of unreacted excess urea, cold-water-soluble monomethylol urea, dimethylol urea and monomethylene diurea, cold-water insoluble but hot-water-soluble dimethylene triurea and trimethylene tetraurea, and hot-water-insoluble urea with a carbon chain length exceeding four carbon atoms. The main components of polyurea formaldehyde are a series of long-chain condensates of urea and formaldehyde, such as dimethylene triurea and trimethylene tetraurea; these condensates are cold-water-insoluble, can control the rate of release of nitrogen element, preventing the loss of nitrogen, and can be slowly decomposed by microbes in soil. The use of polyurea formaldehyde as the coating enables the slow release of granular fertilizer in the coating to be controlled, such that it is fully absorbed and utilized by plants, thereby effectively increasing the utilization rate of chemical fertilizer, and reducing non-point-source pollution of soil and water systems caused by chemical fertilizer.

The coating layer 120 of the slow/controlled-release fertilizer 100 with a core-shell structure is polyurea formaldehyde. In some embodiments, the coating layer 120 contains urea and water-soluble methylol urea. Excess urea and unpolymerized water-soluble methylol urea contained in the coating layer 120 dissolve in soil, gradually forming tiny holes, such that a portion of water-soluble nutrients in the fertilizer granule core 110 are first slowly released for absorption by crops. A polymerized water-insoluble component contained in the coating layer 120 decomposes slowly through the action of microbes in soil, for absorption by crops. As the coating layer 120 decomposes, nutrients of the granular fertilizer in the core are slowly released, until finally the coating layer 120 is completely decomposed, and all nutrients are completely released. Since the carbon chain length of polyurea formaldehyde in the coating layer 120 varies, the rate of decomposition also varies, and the intensity of controlled release of nutrients of the fertilizer granule core 110 also varies accordingly. Coating layers 120 of different carbon chain lengths and thicknesses are prepared, thereby meeting the growth needs of different crops. The coating layer 120 itself is a slow-release nitrogen fertilizer, which leaves no residue at all after decomposition, and has no film shell degradation problem, so is environmentally friendly.

In this text, by controlling operating conditions such as reaction temperature, pH and starting material proportions, polyurea formaldehydes of different carbon chain lengths having different molecular weight distributions are produced.

The coating layer 120 itself is a slow-release nitrogen fertilizer, which can be absorbed by crops after decomposition, leaving no residue at all, and has no film shell degradation problem, so is environmentally friendly. A characteristic of this slow/controlled-release fertilizer 100 with a core-shell structure is that fertilizer is enveloped in fertilizer, with no other materials being added, so it will not pollute soil. Furthermore, the starting materials urea and formaldehyde which are used to prepare the coating material are commonly used starting materials which are readily available on the market, and are low-priced; the cost price of the synthesized coating layer 120 is only about 2000 RMB per ton, which is about one tenth of the price of other coating materials on the market, so use for large-scale agricultural production is possible. Compound fertilizers coated with degradable organic polymers, which have a high price on the market, can only be used for high-value cash crops or flowers, etc.; or such materials are only used to envelop water-soluble nitrogen fertilizer, followed by blending with granular fertilizer containing phosphorus, potassium and moderate-amount/trace elements to produce blended fertilizer; in such fertilizers, the phosphorus, potassium and moderate-amount/trace elements cannot be slowly released.

In the present invention, the polyurea formaldehyde is obtained by in-situ polymerization, while removing water by evaporation, of methylol urea in acidic conditions on the surface of the fertilizer granule core 110.

Specifically, the polyurea formaldehyde is prepared mainly by the following steps: mixing urea and formaldehyde in the molar ratio 1 - 2.5 : 1, adjusting the pH of the reaction system to 7.5 - 11.5 and the temperature to 50°C - 75°C, and then adjusting the pH to 2.5 - 5.5.

Making a comparison with conventional polyurea formaldehyde preparation methods, conventional polyurea formaldehyde preparation consists of first dissolving granular urea in water, then adding a formaldehyde solution, heating the mixed solution to a certain temperature, and adjusting the pH, such that a methylolation reaction takes place. When the reaction is complete, the pH and temperature are adjusted again, such that a polymerization reaction takes place. The polyurea formaldehyde prepared by the conventional method is a suspension, and the polymerization reaction takes place completely in water. With such a preparation method, the water content is up to 70% or more after completion of the polymerization reaction, and it is necessary to perform discharge, cooling, and centrifugation or plate-and-frame press-filtration removal of a portion of the water, but at this time the filter cake still contains 35% - 45% water, and this portion of water must be removed by high-temperature heating in a drying machine, to finally obtain a mixed polyurea formaldehyde slow-release nitrogen fertilizer in powdered or lump form. Since the polyurea formaldehyde prepared by the conventional method has a high water content, and a polymerization reaction has already taken place in aqueous solution, spraying to form a film is not possible. Even if mixing with other binders is carried out to form an enveloping film, cross-linking and entanglement will not take place again among the various molecules; the structure of the film is not sufficiently dense, and disperses and disintegrates in soil very easily, so the granular fertilizer core thereof cannot be released slowly.

In the method for preparing the coating layer 120 of the present invention, the urea does not need to be dissolved in water first, but instead dissolves and reacts in a formaldehyde solution; a mixed solution of methylol urea and urea that is produced has a low water content, e.g. 35% - 45%; after adjusting to acidity, no polymerization reaction takes place in the aqueous phase; instead, spraying onto the surface of the fertilizer granule core 110 is carried out, polymerization and solidification to form a film take place at the same time as water evaporates, and cross-linking and entanglement take place among the various molecules; the film has a dense structure, which does not disintegrate in soil, and the objective of controlling the slow release of various nutritional elements in the fertilizer granule core 110 is thereby achieved.

In some embodiments of the present invention, the molar ratio of urea to formaldehyde is 1.2 - 2.2 : 1 or 1.5 - 2 : 1 or 1.6 - 1.8 : 1.

In some embodiments, a fertilizer granule serving as the core contains any one of, or a combination of more than one of the elements N, P and K. Depending on crop needs, the fertilizer granule may also contain moderate-amount/trace elements, e.g. at least one element selected from Ca, Mg, S, Fe or Zn. The fertilizer granule, which contains a large amount of element(s) such as N, P and K and optional moderate-amount/trace elements such as Ca, Mg, S, Fe and Zn, etc. is enveloped by the coating layer 120; in the process of the coating layer 120 being decomposed, the nutritional elements of the fertilizer core are slowly released at the same time, supplying adequate nutrients to crops in a timely manner. In some coated fertilizers on the market, in order to reduce costs, only a nitrogen-containing fertilizer is coated; other fertilizers containing elements such as P and K are not coated, and the phosphorus and potassium fertilizers are blended with the coated nitrogen fertilizer to form a slow/controlled-release coated fertilizer for sale. The blended fertilizer only enables N to be released slowly; P, K and other nutritional elements cannot be released slowly.

Furthermore, in some embodiments of the present invention, the fertilizer granule serving as the core may comprise one or more of urea, ammonium nitrate and granular calcium ammonium nitrate, and may also comprise one or more of granular potassium nitrate, potassium chloride and granular potassium sulfate, or granular monoammonium phosphate, diammonium phosphate and various contents of granular compound fertilizer, etc. It must be explained that the fertilizer contained in the fertilizer granule core 110 may be selected according to actual needs, may be made by oneself, and may also be purchased directly on the market; the present invention imposes no limitations.

The present invention provides a method for preparing a slow/controlled-release fertilizer 100 with a core-shell structure, comprising: producing methylol urea from urea and formaldehyde in alkaline conditions, then adjusting to acidity to obtain a coating starting material liquid, spraying the coating starting material liquid onto a surface of a fertilizer granule core 110, carrying out in-situ polymerization and solidification while removing water by evaporation to produce polyurea formaldehyde covering the surface of the fertilizer granule core 110, to obtain the slow/controlled-release fertilizer 100 with a core-shell structure.

Specifically, the coating starting material liquid is prepared by the following steps: producing methylol urea from urea and formaldehyde at a pH of 7.5 - 11.5 and a temperature of 50°C - 75°C, then adjusting the pH to 2 - 5.5.

In some embodiments, in order to accelerate the evaporation of water, the fertilizer granule core 110 may be preheated. For example, the fertilizer granule core 110 is preheated to 60°C - 120°C, or 65°C - 105°C, or 70°C - 100°C, or 80°C - 90°C.

Since the water content of the coating starting material liquid is only 35% - 45%, the concentration is high, and when the coating starting material liquid is sprayed onto the surface of the fertilizer granule core 110, water evaporates and polymerization and solidification take place, such that the surface of the fertilizer granule core 110 is covered. By adjusting the molar ratio of urea and formaldehyde, the reaction system pH and temperature, the carbon chain length of the polyurea formaldehyde producing the coating can be varied.

Since polymerization and solidification take place at the same time as evaporation, molecules of different chain lengths cross-link and entangle with each other during the coating process; a portion of cold-water-soluble components are first dissolved and decomposed in soil, and long chains are subsequently decomposed, such that the granular fertilizer core is released in a controlled manner. When the operating conditions are different, the carbon chain length distribution is different, and the intensity of slow/controlled release is also somewhat different.

Furthermore, in some embodiments of the present invention, a polymerization inhibitor may also be added when adjusting an acid pH to slow down the process of polyurea formaldehyde polymerization.

In the present invention, the water content of the coating starting material liquid is 35% - 45% by weight.

Furthermore, by adjusting the thickness to which the coating starting material liquid is sprayed onto the fertilizer granule core 110, the nutrient release period of the slow/controlled-release fertilizer can be adjusted, and the growth needs of different crops can thereby be met. The thickness of the coating layer 120 is controlled by the spraying time according to the size of the core granule and the required release intensity.

In some embodiments, covering is performed by carrying out a spraying process in a drum granulator, or is performed by a fluidized-bed coating process. In some embodiments, the drum granulator and fluidized bed are general-purpose equipment for granulation in the chemical fertilizer industry. Of course, those skilled in the art could also make the drum granulator and fluidized bed for themselves according to the Description of the present disclosure.

In some embodiments of the present invention, the mass ratio of the coating layer 120 to the fertilizer granule core 110 is 1 : 2 - 1 : 20. In some embodiments, the range of alkalinity is pH 7.5 - 11.5, or pH 8 - 10, or pH 8.5 - 9.5. In some embodiments, the range of acidity is pH 2 - 5.5, or pH 2.5 - 5, or pH 3 - 3.8.

In some embodiments of the present invention, urea is added to the reaction system in the form of a solid, molten urea or a concentrated solution with a urea content of 90% (w) or more. In some embodiments of the present invention, the mass concentration of formaldehyde is 37% or more.

Furthermore, in order to ensure that the coating starting material liquid can be sprayed uniformly, in some embodiments of the present invention, the coating starting material liquid is continuously sprayed onto the surface of the fertilizer granule core 110, and polymerization and solidification take place during spraying.

Features and properties of the method of the present invention are described in further detail below in conjunction with examples.

### Example 1

Granular urea and a formaldehyde solution with a mass concentration of 37% are mixed thoroughly in the molar ratio 1.65 : 1 in a reaction kettle, and heated to 55°C; sodium carbonate is added to adjust the pH to 8.5, and methylol urea is produced after a reaction time of 0.8 hour. Dilute sulfuric acid is then added to adjust the pH to 3.8, to obtain a coating starting material liquid. Granular urea with a diameter of about 2 mm is added in advance to a drum coating machine (drum granulator) rotating at a rotation speed of 14 rpm and is preheated to 100°C, then the prepared coating starting material liquid at pH 3.8 is continuously sprayed onto the surface of the granular urea, such that it continuously solidifies to form a film. The spraying time is 15 minutes, and a slow/controlled-release nitrogen fertilizer with a core-shell structure and a nitrogen content of 44% is produced.

### Example 2

Molten urea and a formaldehyde solution with a mass concentration of 37% are mixed thoroughly in the molar ratio 1.75 : 1 in a reaction kettle, and the temperature is adjusted to 60°C; a dilute solution of sodium hydroxide is added to adjust the pH to 9.0, and methylol urea is produced after a reaction time of 0.6 hour. Dilute sulfuric acid is then added to adjust the pH to 3.0, to obtain a coating starting material liquid. Fertilizer granules with a diameter of about 3.5 mm and N, P and K contents of 17.2%, 18.5% and 12.3% respectively are added in advance to a drum coating machine rotating at a rotation speed of 14 rpm and are preheated to 110°C, then the prepared coating starting material liquid at pH 3 is continuously sprayed onto the surface of the fertilizer granules serving as the core, such that it continuously solidifies to form a film, producing a slow/controlled-release fertilizer 100 with a core-shell structure and N, P and K contents of 25%, 12% and 8% respectively; the spraying time is 18 minutes.

### Example 3

Granular urea and a formaldehyde solution with a mass concentration of 45% are mixed thoroughly in the molar ratio 1.85 : 1 in a reaction kettle, and heated to 60°C; sodium carbonate is added to adjust the pH to 9.5, and methylol urea is produced after a reaction time of 0.5 hour. Dilute sulfuric acid is then added to adjust the pH to 3.5, to obtain a coating starting material liquid. Fertilizer granules with a diameter of about 3.5 mm and N, P and K contents of 20%, 17% and 14% respectively are added to a drum granulator rotating at a rotation speed of 14 rpm and are preheated to 105°C, then the coating starting material liquid at pH 3.5 is continuously sprayed onto the surface of the fertilizer granules serving as the core, such that it continuously solidifies to form a film, producing a slow/controlled-release fertilizer 100 with a core-shell structure and N, P and K contents of 28%, 12% and 10% respectively; the spraying time is 16 minutes.

### Example 4

A concentrated urea solution with a urea content of 95% (w) and a formaldehyde solution with a mass concentration of 37% are mixed thoroughly in the molar ratio 2.2 : 1 in a reaction kettle, and the temperature is adjusted to 60°C; sodium carbonate is added to adjust the pH to 11.5, and methylol urea is produced after a reaction time of 0.4 hour. Dilute sulfuric acid is then added to adjust the pH to 3.2, to obtain a coating starting material liquid. Fertilizer granules with a diameter of about 3.5 mm and N, P and K contents of 19%, 11.5% and 7% respectively are added in advance to a drum coating machine rotating at a rotation speed of 14 rpm and are preheated to 100°C, then the coating starting material liquid at pH 3.2 is continuously sprayed onto the surface of the fertilizer granules serving as the core, such that it continuously solidifies to form a film, producing a slow/controlled-release fertilizer 100 with a core-shell structure and N, P and K contents of 27%, 8% and 5% respectively; the spraying time is 15 minutes.

### Example 5

Granular urea and formaldehyde with a mass fraction of 37% are mixed thoroughly in the molar ratio 1.5 : 1 in a reaction kettle, and heated to 60°C; a dilute solution of sodium hydroxide is added to adjust the pH to 9.5, and methylol urea is produced after a reaction time of 0.6 hour. A phenolic polymerization inhibitor is added, then dilute sulfuric acid is added to adjust the pH to 3.0, to obtain a coating starting material liquid. Fertilizer granules with a diameter of about 3.5 mm and N, P and K contents of 16%, 14% and 18.5% respectively are added to a fluidized-bed coating machine and are preheated to 100°C, then the coating starting material liquid at pH 3.0 is continuously sprayed onto the surface of the granular fertilizer serving as the core, such that it continuously solidifies to form a film, producing a slow/controlled-release fertilizer 100 with a core-shell structure and N, P and K contents of 25%, 9% and 12% respectively; the spraying time is 20 minutes.

### Comparative example 1

Comparative example 1 is a blended fertilizer. The blended fertilizer is one in which the coated urea granules in example 1, triple superphosphate and granular potassium chloride are blended so as to have the contents 27-10-8.

### Comparative example 2

The fertilizer of comparative example 2 is an ordinary compound fertilizer (with no coating) with the same fertilizer contents as in example 2.

### Comparative example 3

The fertilizer of comparative example 3 is an ordinary compound fertilizer (with no coating) with the same fertilizer contents as in example 3.

### Comparative example 4

The fertilizer in comparative example 4 is an ordinary compound fertilizer (with no coating) with the same fertilizer contents as in example 4.

### Comparative example 5

The fertilizer in comparative example 5 is an ordinary compound fertilizer (with no coating) with the same fertilizer contents as in example 5.

### Test example 1

The slow/controlled-release fertilizers of examples 1 - 5 and the fertilizers of comparative examples 1 - 5 are applied in test fields with different soils and different crops; in each case, a single application of base fertilizer is used, with no top dressing. The test fields are located in the Henan region, and an experimental plan is designed before fertilizer application; after harvesting, crop yields are subjected to statistical analysis. For identical fertilizer application amounts, the results are recorded in table 1; other field management is the same in each case.

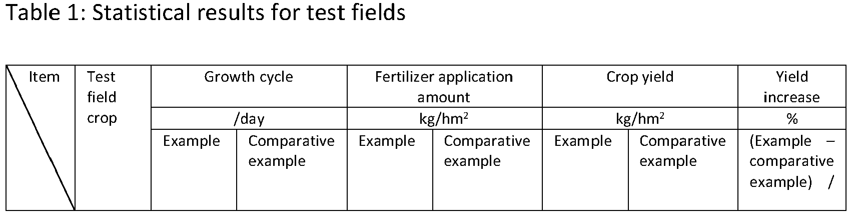

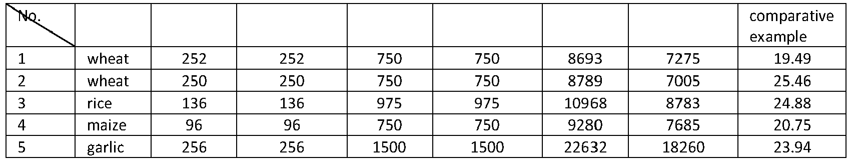

### Test example 2

The slow/controlled-release fertilizers of examples 1 - 5 and the fertilizers of comparative examples 1-5 are applied in test fields with different soils and different crops; in each case, a single application of base fertilizer is used, with no top dressing. The test fields are located in different regions in Henan province, and an experimental plan is designed before fertilizer application; after harvesting, crop yields are subjected to statistical analysis. For a 10% reduction in the application amounts of the fertilizers in examples 1-5, the results are recorded in table 2; other field management is the same in each case.

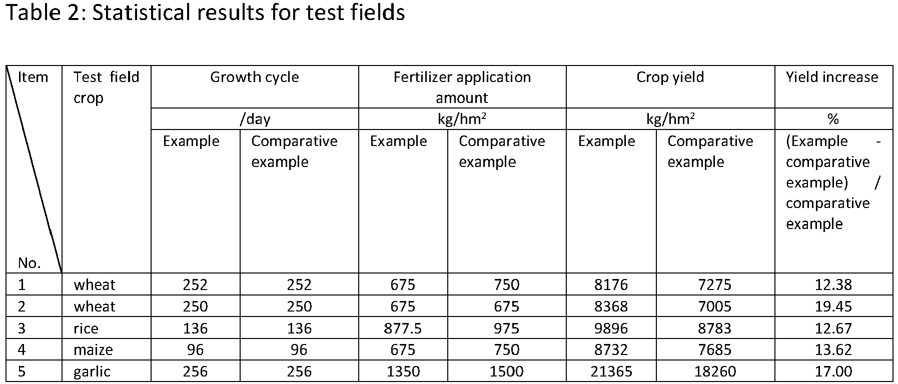

Analysis of results: it can be seen through a comparison of the field test results above that all of the slow/controlled-release fertilizers in the examples of the present invention exhibit an obvious yield increasing effect, both in the case where the growth cycles and the fertilizer application amounts are the same for examples 1-5 and comparative examples 1 - 5, and also in the case where the application amounts of the fertilizers of examples 1 - 5 are reduced by 10% as compared with those of comparative examples 1 - 5; this indicates that the fertilizers have a significantly increased utilization rate, so have excellent promotion value. Furthermore, it can be determined from the test results in table 1 and table 2 that due to the presence of the polyurea formaldehyde coating layer 120 in the examples of the present invention, the slow-release action of the polyurea formaldehyde coating layer 120 is good, and even if the amount of fertilizer used is reduced, the slow/controlled-release fertilizer in these examples still achieves an increase in crop yield.

In summary, in the method for preparing the slow/controlled-release fertilizer 100 with a core-shell structure in the present invention, the coating layer 120 of the core-shell structure is polyurea formaldehyde, which itself is a slow-release nitrogen fertilizer; excess urea and unpolymerized water-soluble methylol urea contained in the coating layer 120 cause a portion of water-soluble nutrients in the core fertilizer to be first slowly released and absorbed by crops. The polymerized water-insoluble coating layer 120 decomposes slowly through the action of microbes in soil and is absorbed by crops; finally, all nutrients are released, supplying adequate nutrients to crops in a timely manner. In the process of the coating layer 120 being slowly decomposed, since the carbon chain length in the coating varies, the rate of decomposition also varies. The coating layer 120 leaves no residue at all after being decomposed, and has no film shell degradation problem, so is environmentally friendly.

The examples described above are some, not all, of examples of the present invention. The detailed description of examples of the present invention is not intended to limit the scope of the present invention for which protection is claimed, but merely shows selected examples of the present invention.

## Claims

1. A method for preparing the slow/controlled-release fertilizer with a core-shell structure, comprising: a fertilizer granule core; and a polyurea formaldehyde coating layer which covers a surface of the fertilizer granule core; the molar ratio of urea to formaldehyde in a starting material of the polyurea formaldehyde is 1 - 2.5 : 1, and the polyurea formaldehyde at least comprises polyurea formaldehyde with 2-5 carbon atoms,
said method comprising:
producing methylol urea from urea and formaldehyde in alkaline conditions, then adjusting to acidity, to produce a coating starting material liquid;
spraying the coating starting material liquid onto the surface of the fertilizer granule core, and carrying out in-situ polymerization and solidification while removing water by evaporation to produce polyurea formaldehyde to cover the fertilizer granule core, to obtain the slow/controlled-release fertilizer with a core-shell structure
wherein the water content of the coating starting material liquid is 35% - 45% by weight.

2. The method for preparing a slow/controlled-release fertilizer with a core-shell structure as claimed in claim 1, **characterized in that** the covering is performed by a spraying process in a drum granulator, or is performed by a fluidized-bed coating process.

3. The method for preparing a slow/controlled-release fertilizer with a core-shell structure as claimed in claim 1, **characterized in that** the preparation method can realize continuous production; preferably, the coating starting material liquid is continuously sprayed onto the surface of the fertilizer granule core.

4. The method for preparing a slow/controlled-release fertilizer with a core-shell structure as claimed in claim 1, **characterized in that** the urea is added to the reaction system in the form of a solid, molten urea or a concentrated solution with a urea content of 90% (w) or more.

5. The method for preparing a slow/controlled-release fertilizer with a core-shell structure as claimed in claim 1, **characterized in that** the range of the alkaline pH is pH 7.5 - 11.5, or pH 8 - 10, or pH 8.5 - 9.5; preferably, the range of the acidic pH is pH 2 - 5.5, or pH 2.5 - 5, or pH 3 - 3.8.

6. The method for preparing a slow/controlled-release fertilizer with a core-shell structure as claimed in claim 1, **characterized in that** the coating starting material liquid is prepared by the following steps: producing methylol urea from urea and formaldehyde at a pH of 7.5 - 11.5 and a temperature of 50°C - 75°C, then adjusting the pH to 2.5 - 5.5.

7. The method for preparing a slow/controlled-release fertilizer with a core-shell structure as claimed in claim 1, **characterized in that** the carbon chain length of polyurea formaldehyde in the coating layer varies.

8. The method for preparing a slow/controlled-release fertilizer with a core-shell structure as claimed in claim 1, **characterized in that**, since polymerization and solidification take place at the same time as evaporation, molecules of different chain lengths cross-link and entangle with each other during the coating process.

## Patentansprüche

1. Verfahren zur Herstellung des Düngers mit langsamer/kontrollierter Freisetzung mit einer Kern-Schalenstruktur, bestehend aus: einem Düngergranulatkern; und eine Polyharnstoffformaldehyd-Beschichtungsschicht, die eine Oberfläche des Düngergranulatkerns bedeckt; das molare Verhältnis von Harnstoff zu Formaldehyd in einem Ausgangsmaterial des Polyharnstoffformaldehyds ist 1-2.5:1, und das Polyharnstoffformaldehyd umfasst mindestens Polyharnstoffformaldehyd mit 2-5 Kohlenstoffatomen,
das Verfahren umfasst:
Herstellung von Methyloharnstoff aus Harnstoff und Formaldehyd unter alkalischen Bedingungen, dann Anpassung an den Säuregehalt, um eine Beschichtung Ausgangsmaterial Flüssigkeit zu erzeugen;
Sprühen der Beschichtung Ausgangsmaterialflüssigkeit auf die Oberfläche des Düngemittelgranulatkerns und Durchführen der In-situ Polymerisation und Erstarrung beim Entfernen von Wasser durch Verdunstung, um Polyharnstoffformaldehyd zu produzieren, um den Düngemittelgranulatkern zu bedecken, um den langsamen/kontrollierten Freisetzungsdünger mit einer Kern-Schalenstruktur zu erhalten, wobei der Wassergehalt der Beschichtung Ausgangsmaterialflüssigkeit 35,45% nach Gewicht beträgt.

2. Verfahren zur Herstellung eines Düngers mit langsamer/kontrollierter Freisetzung mit einer Kern-Schalenstruktur, wie in Anspruch 1 behauptet, **dadurch gekennzeichnet, dass** die Abdeckung durch ein Sprühverfahren in einem Trommelgranulator oder durch ein Wirbelschichtbeschichtungsverfahren durchgeführt wird.

3. Das Verfahren zur Herstellung eines Düngers mit langsamer/kontrollierter Freisetzung mit einer Kern-Schalenstruktur, wie in Anspruch 1 behauptet, **dadurch gekennzeichnet, dass** das Präparationsverfahren eine kontinuierliche Produktion realisieren kann; Vorzugsweise wird die Beschichtungsstartstoffflüssigkeit kontinuierlich auf die Oberfläche des Düngergranulatkerns gesprüht.

4. Verfahren zur Herstellung eines Düngemittels mit langsamer/kontrollierter Freisetzung mit einer Kern-Schalen-Struktur gemäß Anspruch 1, **dadurch gekennzeichnet, dass** der Harnstoff dem Reaktionssystem in Form eines festen, geschmolzenen Harnstoffs oder einer konzentrierten Lösung mit einem Harnstoffgehalt von 90% (w) oder mehr zugesetzt wird.

5. Das Verfahren zur Herstellung eines Düngers mit langsamer/kontrollierter Freisetzung mit einer Kernschalenstruktur, wie in Anspruch 1 behauptet, **dadurch gekennzeichnet, dass** der alkalische pH-Bereich pH 7.5-11.5 oder pH 8-10 oder pH 8.5-9.5 beträgt; vorzugsweise ist der Bereich des sauren pH pH pH 2-5.5 oder pH 2.5-5 oder pH 3-3.8.

6. Verfahren zur Herstellung eines Düngers mit langsamer/kontrollierter Freisetzung mit Kernschalenstruktur gemäß Anspruch 1, **dadurch gekennzeichnet, dass** die Flüssigkeit des BeschichtungsAusgangsmaterials in den folgenden Schritten hergestellt wird: Herstellung von Methyloharnstoff aus Harnstoff und Formaldehyd bei einem pH-Wert von 7.5-11.5 und einer Temperatur von 50°C-75°C, dann Anpassung des pH-Werts auf 2.5-5.5.5.

7. Das Verfahren zur Herstellung eines Düngers mit langsamer/kontrollierter Freisetzung mit einer Kern-Schalenstruktur gemäß Anspruch 1, **dadurch gekennzeichnet, dass** die Kohlenstoffkettenlänge von Polyharnstoff-Formaldehyd in der Beschichtungsschicht variiert.

8. Das Verfahren zur Herstellung eines Düngers mit langsamer/kontrollierter Freisetzung mit einer Kern-Schalenstruktur gemäß Anspruch 1, **dadurch gekennzeichnet, dass** Moleküle unterschiedlicher Kettenlängen sich während des Beschichtungsprozesses kreuzen und miteinander verschränken, da Polymerisation und Erstarrung gleichzeitig mit Verdampfung stattfinden.

## Revendications

1. Méthode de préparation d'engrais à libération prolongée / contrôlée avec structure noyau - coquille, comprenant: noyau de granulés d'engrais; Et un revêtement de polyurée - formaldéhyde recouvrant la surface du noyau des particules d'engrais; Le rapport molaire urée / formaldéhyde dans la matière première du polyurée - formaldéhyde est de 1 à 2,5: 1,
Ledit procédé comprend:
Préparation d'hydroxyméthylurée à partir d'urée et de formaldéhyde dans des conditions basiques, puis ajustement de l'acidité, préparation d'un liquide de charge de peinture;
Pulvérisation du liquide de départ de la peinture sur la surface du noyau de particules d'engrais, polymérisation in situ tout en évaporant la déshydratation, produisant du polyuréthane recouvrant le noyau de particules d'engrais, Afin d'obtenir un engrais à libération prolongée / contrôlée avec une structure noyau - coquille dans laquelle la teneur en humidité du liquide de matière première d'enrobage est comprise entre 35% et 45% en poids.

2. Procédé de préparation d'engrais à libération prolongée / contrôlée à structure coeur - coquille selon la revendication 1, **caractérisé en ce que** le recouvrement est réalisé par un procédé de pulvérisation dans un granulateur à tambour ou par un procédé d'enduction en lit fluidisé.

3. Procédé de préparation d'engrais à libération prolongée / contrôlée à structure noyau - coquille selon la revendication 1, **caractérisé en ce que** ledit procédé de préparation permet une production en continu; De préférence, le liquide de charge d'enrobage est pulvérisé en continu sur la surface du coeur des particules d'engrais.

4. Procédé de préparation d'engrais à libération prolongée / contrôlée à structure noyau - coquille selon la revendication 1, **caractérisé en ce que** l'urée est ajoutée au système réactionnel sous forme d'urée solide, fondue ou d'une solution concentrée à 90% ou plus d'urée.

5. Procédé de préparation d'engrais à libération prolongée / contrôlée à structure noyau - coquille selon la revendication 1, **caractérisé en ce que** le pH alcalin est compris entre 7,5 et 11,5, ou entre 8 et 10, ou entre 8,5 et 9,5; De préférence, le pH acide est compris entre pH 2 - 5,5, ou pH 2,5 - 5, ou pH 3 - 3,8.

6. Procédé de préparation d'un engrais à libération prolongée / contrôlée à structure coeur - coquille selon la revendication 1, **caractérisé en ce que** les étapes de préparation du liquide de charge enrobé sont les suivantes: préparation de l'hydroxyméthylurée à partir d'urée et de formaldéhyde à un pH de 7,5 - 11,5 et à une température de 50 - 75°C, puis ajustement du pH à 2,5 - 5,5.

7. Procédé de préparation d'engrais à libération prolongée / contrôlée à structure noyau - coquille selon la revendication 1, **caractérisé en ce que** la longueur de la chaîne carbonée du polyurée - formaldéhyde dans le revêtement varie.

8. Procédé de préparation d'engrais à libération prolongée / contrôlée à structure noyau - coquille selon la revendication 1, **caractérisé en ce que** des molécules de différentes longueurs de chaîne se réticulent et s'enchevêtrent les unes dans les autres lors de l'enrobage du fait que la polymérisation et la solidification se produisent simultanément avec l'évaporation.
